# DEMANDE DE BREVET EUROPEEN

(11) **EP 2 674 779 A1**
(43) Date de publication de la demande: **18.12.2013**
(21) Numéro de dépôt: 13171782.9
(22) Date de dépôt: 13.06.2013
(51) Int. Cl.: G01S 19/09, G01S 5/00

(54) **Système de radio-navigation par satellite à architecture déportée**

(30) Priorité: 15.06.2012 FR 1201709
(71) Demandeur: Thales, 92200 Neuilly Sur Seine (FR)
(72) Inventeur: Revol, Marc, 26120 Upic (FR); Pietin, David, 33290 Le Pian-Medoc (FR); Bouniol, Pierre, 38840 Saint Hilaire Du Rosier (FR)
(74) Mandataire: Hammes, Pierre

(57) **Abrégé**

Station de réception de signaux de radio-navigation par satellite (104) comportant des premier moyens (140,141) de transmission large bande adaptés pour recevoir un signal spécifique émis par un émetteur/récepteur (101,102,103) et y extraire au moins un signal de radio-navigation utilisateur, des premier moyens centralisés (142) de traitement de signal adaptés à déterminer une mesure de pseudo-distance et des moyens centralisés de calcul (143) d'informations de navigation (PVT), la station de réception (104) comportant une première voie de référence de réception de signaux de radio-navigation comportant une antenne directive (144) à formation de voie, des second moyens (145) de traitement du signal de radio-navigation reçu par ladite antenne directive (144) à formation de voie et une unité de calcul (146) adaptée à réaliser une amélioration de la fiabilité, un contrôle de l'intégrité et une authentification desdites informations de navigation (PVT).

## Description

L'invention concerne le domaine des systèmes de radio-navigation par satellite, connus également sous l'acronyme systèmes GNSS (Global Navigation Satellite System). On connait par exemple le système américain GPS (Global Positioning System) et le système européen GALILEO.

L'invention concerne à la fois les signaux GNSS à accès non sécurisés tels que les signaux GPS SPS (Standard Positioning Service) et les signaux GNSS à accès sécurisés tels que les signaux GPS PPS (Precise Positioning Service). L'accès aux signaux GNSS sécurisés nécessite une clé de chiffrement pour pouvoir acquérir et poursuivre les signaux satellites et décrypter les données du message de navigation ou le code d'étalement.

Les signaux à accès non sécurisés incluent notamment les signaux GPS de type C/A, L1C et L2C ainsi que les signaux Galileo de type L1, E6, E5a et E5b.

Les signaux à accès sécurisés incluent notamment les signaux GPS P(Y) L1 et L2 et M et les signaux Galileo PRS L1 et E6.

Par la suite, on emploie les expressions signaux GNSS sécurisés et signaux GNSS non sécurisés pour désigner respectivement les signaux GNSS à accès sécurisé et à accès non sécurisé.

La présente invention vise à simplifier l'utilisation et à sécuriser les performances des systèmes GNSS connus, notamment, mais pas seulement, pour les applications impliquant l'utilisation de signaux à accès sécurisés.

Pour réaliser un calcul de position à partir de signaux GNSS sécurisés, un récepteur classique doit implémenter un certain nombre de traitements complexes, notamment cryptographiques, qui augmentent sensiblement leur complexité et leur coût.

La complexité est encore accrue lorsque l'on souhaite améliorer la précision des calculs de navigation réalisés, mettre en oeuvre un contrôle de l'intégrité des signaux reçus ou détecter d'éventuels leurres.

Dans les systèmes de radio-navigation connus, l'amélioration de la vulnérabilité des applications GNSS est essentiellement assurée par l'utilisateur final, en introduisant dans les récepteurs des traitements complexes permettent de détecter d'éventuels leurres et de réaliser un contrôle d'intégrité permettant de s'assurer de l'origine des signaux.

Ces traitements supplémentaires, en limite des technologies actuelles, augmentent notablement la complexité et le coût des récepteurs, allant ainsi à l'encontre des possibilités de miniaturisations et de réduction de la consommation universellement recherchées.

Le système proposé selon l'invention permet d'améliorer globalement la robustesse et l'intégrité de signaux GNSS en utilisant, pour l'ensemble des récepteurs GNSS d'une zone géographique donnée, des moyens mutualisés d'acquisition et de poursuite des signaux, déportés dans des stations de référence offrant des capacités renforcées de protection des traitements et de corrections des mesures.

L'utilisation de stations de référence permet de réaliser au profit des utilisateurs des traitements complexes déportés et de réduire les erreurs de mesures liées aux imprécisions liées à la propagation des signaux de radionavigation (erreurs ionosphérique et troposphérique) et à l'environnement proche du récepteur (trajets multiples).

En outre, la solution proposée améliore notablement la disponibilité et l'intégrité de positionnement offerte par les systèmes de navigation par satellites.

Enfin, l'invention proposée permet d'envisager le contrôle de l'existence d'éventuelles sources de brouillage et de leurrage des signaux GNSS reçus et de vérifier l'authentification des signaux associés aux différents utilisateurs.

L'invention a ainsi pour objet une station de réception de signaux de radio-navigation par satellite **caractérisée en ce qu'**elle comporte au moins des premier moyens de transmission large bande adaptés pour recevoir un signal spécifique émis par un émetteur/récepteur et extraire au moins un signal de radio-navigation, appelé signal de radio-navigation utilisateur, contenu dans ledit signal spécifique, des premier moyens centralisés de traitement numérique dudit signal de radio-navigation utilisateur adaptés à déterminer une mesure de pseudo-distance associée audit signal et des moyens centralisés de calcul d'informations de navigation (PVT) à partir des dites mesures de pseudo-distance, lesdits moyens de transmission étant en outre adaptés à transmettre lesdites informations de navigation (PVT) audit émetteur/récepteur, la station de réception comportant en outre une première voie de référence de réception de signaux de radio-navigation comportant au moins une antenne directive à formation de voie pour la réception de signaux de radio-navigation émis par au moins un satellite, des second moyens de traitement du signal de radio-navigation reçu par ladite antenne directive à formation de voie et une unité de calcul adaptée à réaliser, à partir des mesures fournies par lesdits second moyens de traitement du signal, une amélioration de la fiabilité, un contrôle de l'intégrité et une authentification desdites informations de navigation (PVT) et comportant au moins un premier module de sécurité adapté à mettre en oeuvre, de façon centralisée, le déchiffrement des codes d'étalement et des données de tous les signaux de radio-navigation utilisateur.

Dans une variante de réalisation de l'invention, l'unité de calcul comporte en outre un deuxième module adapté à réaliser la démodulation du signal de radio-navigation de référence, à calculer une estimée des erreurs liées à la propagation ionosphérique des signaux à partir de mesures du temps de transmission entre le satellite et la station de référence réalisées sur au moins deux signaux reçus sur la première voie de référence à deux fréquences distinctes et à fournir auxdits premier moyens de traitement de signal ces corrections de sorte à améliorer la fiabilité du calcul des informations de navigation (PVT).

Dans une autre variante de réalisation de l'invention, l'unité de calcul comporte en outre un troisième module adapté à vérifier l'intégrité des signaux de radio-navigation utilisateur en comparant la mesure de pseudo-distance calculée par les premier moyens de traitement de signal à une mesure de pseudo-distance de référence calculée à partir de la position connue de la station de référence et de la position des satellites de radio-navigation extraites des éphémérides contenus dans le message de navigation démodulé par le deuxième module.

Dans une autre variante de réalisation de l'invention, l'unité de calcul comporte en outre une seconde voie de réception de signaux de radio-navigation et un quatrième module adapté à réaliser l'authentification des signaux de radio-navigation sécurisés reçus par la station de référence en exécutant au moins les étapes suivantes :
- Comparer l'écart entre les données de navigation mesurées à partir du signal sécurisé reçu d'une part sur la première voie de référence et d'autre part sur la seconde voie de référence avec le rayon de protection du signal sécurisé,
- Si l'écart est inférieur au rayon de protection, authentifier le signal sécurisé reçu sur la seconde voie de réception.

Selon un aspect particulier de cette variante, le quatrième module est en outre adapté à réaliser l'authentification des signaux non sécurisés reçus par la station de référence en exécutant au moins les étapes suivantes :
- Comparer l'écart entre les données de navigation mesurées à partir du signal non sécurisé reçu sur la seconde voie de réception d'une part et du signal sécurisé reçu sur la seconde voie de réception d'autre part avec une combinaison des rayons de protection du signal non sécurisé et du signal sécurisé,
- Si l'écart est inférieur à ladite moyenne, authentifier le signal non sécurisé reçu sur la seconde voie de réception.

Selon un autre aspect particulier de cette variante, le quatrième module est en outre adapté à réaliser l'authentification des signaux non sécurisés utilisateurs en exécutant au moins les étapes suivantes :
- Comparer l'écart entre les données de navigation mesurées à partir du signal utilisateur non sécurisé d'une part et du signal utilisateur sécurisé d'autre part avec une combinaison des rayons de protection du signal utilisateur non sécurisé et du signal utilisateur sécurisé,
- Si l'écart est inférieur à ladite moyenne, authentifier le signal non sécurisé utilisateur.

L'invention a également pour objet un récepteur de radio-navigation par satellites **caractérisé en ce qu'il** comporte des moyens adaptés pour transmettre les signaux de radio-navigation reçus, transposés en fréquence intermédiaire ou en bande de base vers une station de référence au sol et recevoir des données de navigation calculées en provenance de ladite station de référence.

L'invention a également pour objet un système de radio-navigation par satellite comportant au moins une station de réception de signaux de radio-navigation selon l'invention et une pluralité de récepteurs de signaux de radio-navigation selon l'invention.

D'autres caractéristiques et avantages de la présente invention apparaîtront mieux à la lecture de la description qui suit en relation aux dessins annexés qui représentent :
- La figure 1, un synoptique du système de radio-navigation par satellite selon l'invention,
- La figure 2, un schéma détaillé d'une station de référence dudit système selon l'invention,
- La figure 3, un organigramme détaillant les traitements mis en oeuvre par le module de détection de leurres de la station de référence du système selon l'invention.

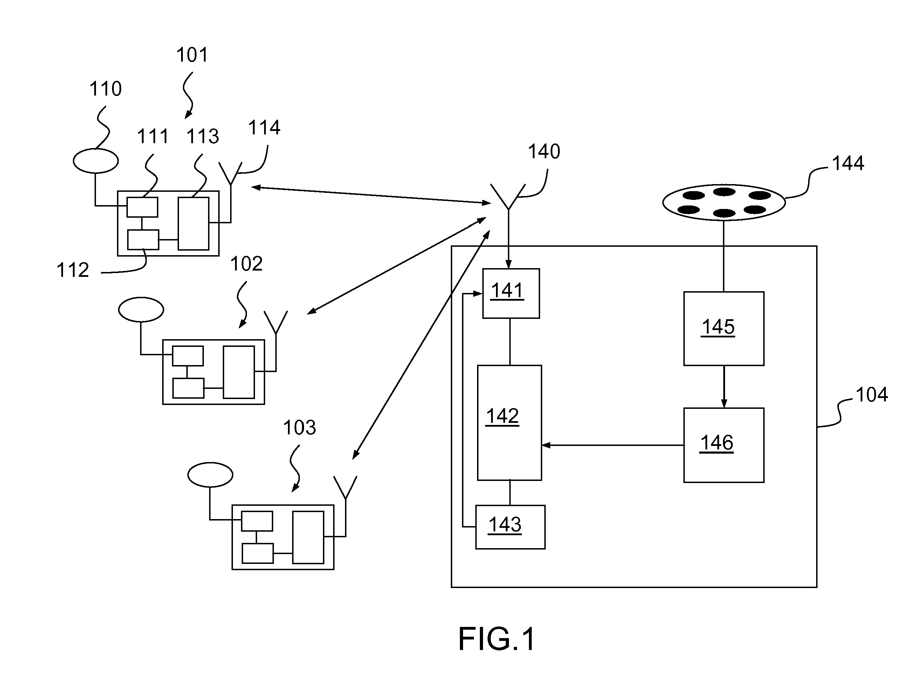

La figure 1 schématise, sur un synoptique, un système de radio-navigation par satellite selon l'invention qui comprend une pluralité de récepteurs 101,102,103 aptes à recevoir des signaux de radio-navigation par satellite émis par les satellites en visibilité desdits récepteurs et une station de calcul de référence 104 qui réalise un ensemble de traitements pour la détermination de données de navigation (PVT) de façon centralisée de sorte d'une part à permettre une diminution de la complexité des traitements mis en oeuvre dans les récepteurs 101,102,103 et d'autre part à permettre une amélioration des performances globales du système grâce notamment à l'exploitation d'une voie de réception dédiée, dite de référence, mise en oeuvre par la station de référence 104.

Chaque récepteur 101,102,103 comporte une antenne 110 de réception des signaux de radio-navigation par satellite, un module RF 111 de réception desdits signaux et de transposition vers une fréquence intermédiaire, un convertisseur analogique numérique 112 et des moyens de communication large bande 113, par exemple un moyen de communication haut débit dans une bande de fréquence VHF, adaptés pour transmettre les signaux de radio-navigation transposés en fréquence intermédiaire ou en bande de base vers la station de référence 104. A cette fin, chaque récepteur 101,102,103 comporte également une antenne 114 pour la transmission des signaux obtenus en fréquence intermédiaire ou en bande de base vers la station de référence 104 et la réception des données de navigation calculées en provenance de la station de référence 104.

Les signaux de radio-navigation reçus par les récepteurs 101,102,103 peuvent être émis par des satellites, par des émetteurs fixes, appelés pseudolites, qui sont des émetteurs terrestres émettant des signaux semblables à ceux des satellites de radio-navigation ou encore par des émetteurs mobiles embarqués sur un porteur aérien, naval ou terrestre. De même les récepteurs 101,102,103 peuvent être fixes ou mobiles et peuvent être embarqués sur un véhicule terrestre, un aéronef ou un navire.

Les récepteurs 101,102,103 adaptés selon l'invention sont simplifiés par rapport aux récepteurs GNSS standard car ils ne mettent en oeuvre aucun traitement algorithmique sur le signal reçu ni de traitement de cryptographie si les signaux sont sécurisés. Une simple transposition sur fréquence intermédiaire ou en bande de base est réalisée pour retransmettre les signaux reçus vers la station de référence 104. En retour, chaque récepteur reçoit les informations de radio-navigation, établies par la station de référence, notamment des informations de position, vitesse et temps (PVT), et de rayon de protection relatif à l'intégrité des mesures fournies.

De cette façon, la complexité des récepteurs est réduite significativement permettant ainsi de la rendre compatible d'applications présentant de fortes contraintes d'intégration, par exemple des récepteurs radio portatifs, des balises, des bouées dérivantes.

La station de référence 104 comporte au moins une antenne 140 d'émission/réception permettant de communiquer avec les récepteurs 101,102,103 via une liaison de communication large bande. L'antenne 140 est par exemple une antenne VHF. Elle comporte également des moyens 141 d'émission/réception associés à l'antenne VHF qui permettent d'une part d'extraire le signal de radio-navigation contenu dans le signal spécifique transmis par les récepteurs sur la liaison VHF et d'autre part de mettre en forme un message contenant les informations PVT et de rayon de protection à destination de chaque récepteur 101,102,103 pour le transmettre sur cette même liaison VHF.

La station de référence 104 comporte également des premier moyens centralisés 142 de traitement numériques des signaux de radio-navigation retransmis par chaque récepteur 101,102,103 et relatifs à l'ensemble des satellites en visibilité de la constellation considérée, ainsi que des moyens de calcul 143 des informations PVT qui sont ensuite transmises en retour aux moyens d'émission/réception 141 pour envoi vers chaque récepteur.

La station de référence 104 comporte aussi une voie de réception de référence des signaux de radio-navigation qui comprend au moins une antenne directive ou un réseau antennaire 144 à formation de voie pointée dans la direction de chaque satellite ou une antenne de type CRPA (Controlled Reception Pattern Antenna), un second moyen 145 de traitement du signal de radio-navigation reçu par l'antenne 144 et une unité de calcul 146 adaptée qui communique avec les premiers moyens centralisés 142 de traitement de signal afin d'améliorer les performances en terme de fiabilité et d'intégrité des mesures PVT réalisées.

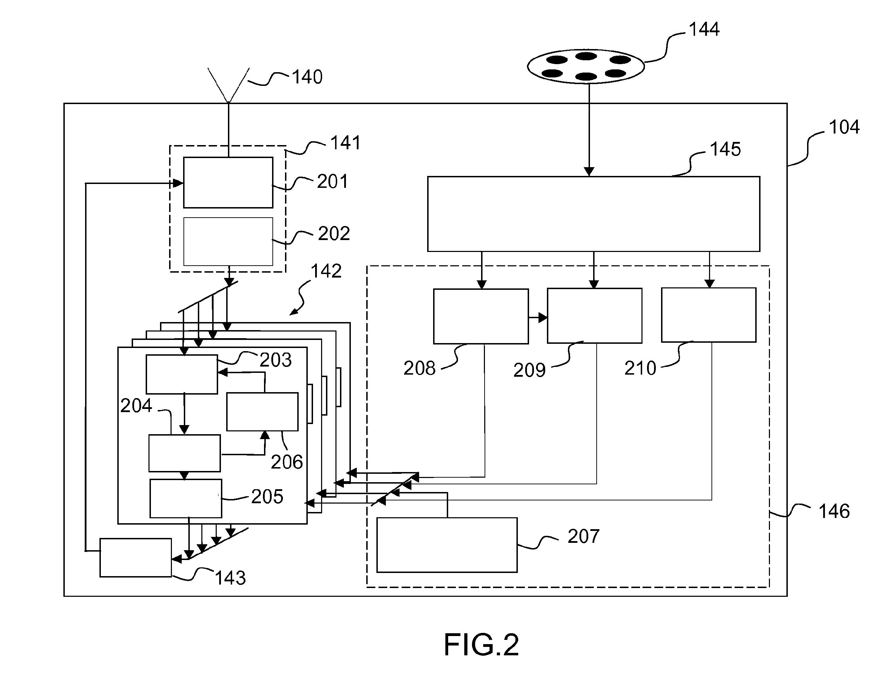

La figure 2 représente un synoptique d'une station de référence 104 selon l'invention. Les éléments identiques entre les figures 1 et 2 sont indiqués avec les mêmes références.

Les moyens 141 d'émission/réception comportent au moins un premier module d'émission/réception 201 d'un signal radio en bande VHF et un second module 202 d'extraction du signal de radio-navigation contenu dans le signal radio VHF reçu par le premier module 201.

Les moyens 142 centralisés dans la station de référence 104 ont pour fonction de mettre en oeuvre l'algorithmie de traitement de signal habituellement réalisée par chaque récepteur 101,102,103 de façon déportée. Plus précisément les moyens 142 comportent au moins un corrélateur 203 du signal de radio-navigation avec une porteuse et un code générés localement, un suivi de synchronisation 204 en phase et en code, une boucle de rétroaction 206 pour asservir la phase et le code du signal reçu sur la porteuse et le code générés localement et enfin un moyen de calcul 205 de données de navigation, position, vitesse et temps, et de rayon de protection à partir des pseudo-distances mesurées pour plusieurs signaux provenant de satellites différents. Les données de navigation sont ensuite mises en forme 143 pour être transmises par les moyens d'émission 141 vers le récepteur 101,102,103 concerné.

L'unité de calcul 146 implémente différentes fonctionnalités. Elle comporte un premier module 207 de déchiffrement des codes d'étalement et des données du signal de radio-navigation, lorsque celui-ci est sécurisé, un deuxième module 208 de démodulation du message de navigation contenu dans le signal de radio-navigation reçu via la voie de référence de la station 104 et de génération de corrections différentielles locales, un troisième module de contrôle de l'intégrité 209 des signaux reçus par les récepteurs et un quatrième module d'authentification et de détection de conditions de bouillage et de leurrage 210.

Le premier module de sécurité 207 assure le décryptage des codes d'étalement et des données des messages contenus dans le signal de radio-navigation pour l'ensemble des récepteurs. Ce premier module concerne les signaux sécurisés, par exemples les signaux GPS PPS. La réception et la gestion des clés de cryptage est effectuée par le module de sécurité 207 de façon centralisée pour l'ensemble des signaux utilisateurs traités par la station de référence 104. Le module de sécurité 207 communique avec le module de traitement de signal 142 pour assurer le déchiffrement des codes d'étalement et des données des messages de radio-navigation. La même loi de cryptage peut s'appliquer à l'identique pour la génération des codes locaux correspondants à un satellite donné, quel que soit l'utilisateur du signal.

L'utilisation d'un module de sécurité déporté dans une station de référence permet d'éliminer les traitements cryptographiques complexes qui doivent habituellement être mis en oeuvre au niveau de chacun des récepteurs utilisateurs et de les centraliser dans une unité de traitement commune pour tous les utilisateurs d'une zone donnée. Elle permet également une première authentification des signaux transmis par les récepteurs.

Le deuxième module 208 est chargé de réaliser la démodulation du signal de radio-navigation reçu sur la voie de référence. Ce signal est reçu par l'antenne à formation de voies 144 pointée dans la direction de chaque satellite. Du fait de l'utilisation d'une antenne spécifique, le signal de radio-navigation reçu sur la voie de référence présente un meilleur rapport signal à bruit en réception que le signal reçu par un récepteur comportant une antenne moins performante. Le module 208 assure la démodulation du message de navigation contenu dans le signal. Ce message contient notamment des informations sur les clés de cryptage, sur les positions des satellites ainsi que des corrections à appliquer aux mesures de pseudo-distances. L'utilisation d'une voie de référence plus robuste permet donc d'améliorer la fiabilité de la démodulation du message de navigation.

En outre, l'antenne 144 peut être associée à un traitement antibrouillage qui permet de lutter contre d'éventuelles sources d'interférences qui peuvent impacter le signal reçu.

Le deuxième module 208 est également chargé d'estimer et de fournir au module de traitement de signal 142 des corrections en temps réel des erreurs liées au signaux reçus, notamment les erreurs de propagation ionosphériques. Pour ce dernier type d'erreur, les biais temporels peuvent être corrigés à partir d'une estimation bi-fréquence de pseudo-distances réalisée sur les signaux reçus sur la voie de référence.

L'erreur de propagation ionosphérique évoluant peu (au phénomène de scintillation près) dans une zone géographique restreinte, tant que l'inclinaison de l'incidence d'arrivée des signaux de radio-navigation n'a pas significativement évolué, l'estimation de cette erreur réalisée par axe à vue pour chacun des satellites visibles est reportable sur les axes à vues des satellites homologues des récepteurs 101,102,103.

L'antenne 144 et les second moyens de traitement de signal 145 sont adaptés à recevoir un signal GNSS sur deux fréquences différentes. Par exemple, pour un signal GPS, les deux fréquences considérées sont prises dans la bande L1 et dans la bande L2 et pour un signal GALILEO, dans la bande L1 et dans la bande E6. L'erreur de propagation ionosphérique est dépendante de la fréquence du signal f, plus précisément elle suit une variation en 1/f². Deux mesures du temps de transmission entre le satellite et la station de référence 104 sur deux signaux reçus à deux fréquences distinctes permet ainsi d'en déduire une estimée de l'erreur de propagation. Cette erreur est ensuite fournie au module 142 comme correction pour qu'elle soit appliquée aux mesures de pseudo-distance réalisées sur les signaux de radio-navigation émis par les récepteurs 101,102,103.

Dans une variante de réalisation, le deuxième module 208 peut également élaborer des corrections différentielles au service des utilisateurs en complément ou conjointement au calcul des corrections des retards de propagation ionosphérique. Ces corrections différentielles sont calculées à partir des signaux reçus sur la voie de réception de référence et de la connaissance de la position de l'antenne 144 et des satellites de radio-navigation (par consultation des éphémérides contenus dans le message de navigation). Les corrections différentielles sont ensuite appliquées sur les mesures de pseudo-distance réalisées pour chaque récepteur.

Le troisième module 209 est chargé de réaliser une vérification de l'intégrité des signaux GNSS transmis par chaque récepteur à la station de référence 104.

A partir des éphémérides contenus dans le message de navigation démodulé par le module 208, et à partir de la connaissance de la position du centre de phase de l'antenne de la station de référence, le module d'intégrité 209 calcule, pour chaque satellite en visibilité, une pseudo-distance de référence.

Ces mesures de pseudo-distance de référence sont ensuite comparées aux mesures de pseudo-distance réelles obtenues après correction des retards de propagation.

Si l'écart entre une pseudo-distance calculée par le module de traitement de signal 142 et la pseudo-distance de référence excède un budget d'erreur alloué pour prendre en compte le bruit de mesure des récepteurs et les incertitudes résiduelles sur les éphémérides ainsi que les dérives d'horloge, alors le calcul de pseudo-distance est rejeté comme non intègre. Ce statut d'intégrité est pris en compte par la station de référence dans le calcul des données de navigation. Précisément, une mesure dont l'intégrité n'est pas validée n'est pas prise en compte.

De cette façon, une vérification centralisée de l'intégrité des signaux reçus par chaque récepteur est réalisée à moindre coût.

En outre, le module d'intégrité 209 calcule également le rayon de protection associé à chaque récepteur GNSS, c'est-à-dire le seuil d'erreur maximal sur la position permettant de garantir que la position calculée par le système est intègre ; une réalisation possible de ce calcul est d'appliquer un calcul HPL et VPL de type RAIM, connu de l'Homme du métier.

Le quatrième module 210 est chargé de réaliser une authentification des différents signaux de radio-navigation reçus d'une part par la station de référence 104 et d'autre part par les utilisateurs 101, 102,103. Un but de l'authentification est de détecter la présence d'éventuels leurres, c'est-à-dire de signaux qui cherchent à imiter les caractéristiques de signaux de radio-navigation par satellite mais qui sont émis par une source intrusive. L'authentification s'applique autant aux signaux GNSS non sécurisés, par exemple les signaux GPS SPS, qu'aux signaux GNSS sécurisés tels que les signaux GPS PPS.

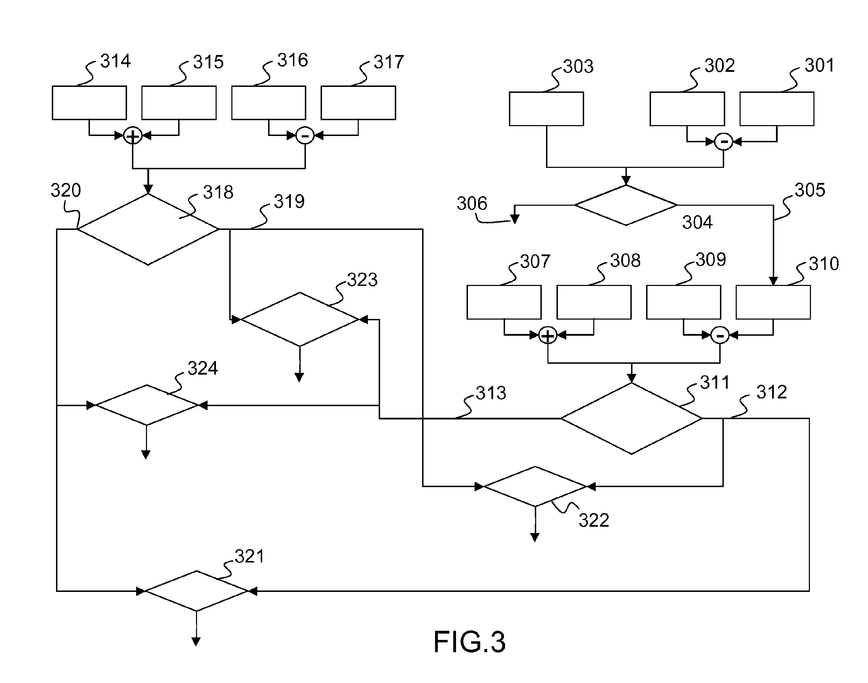

La figure 3 illustre, sur un organigramme, les différents traitements réalisés par le module d'authentification 210.

Dans une première étape, le module d'authentification 210 réalise l'authentification des signaux GNSS sécurisés reçus par la station de référence 104. Pour cela, une seconde voie de réception (non représentée à la figure 2) est utilisée. Cette seconde voie de réception, appelée voie de réception standard par la suite, comporte une antenne standard omnidirectionnelle similaire à l'antenne 110 d'un récepteur GNSS utilisateur 101. Un premier calcul 301 de pseudo-distance, ou de données de navigation PVT, est réalisé sur la première voie de référence à partir des signaux GNSS sécurisés reçus par l'antenne 144 à formation de voie. Par la suite on parlera de données de navigation PVT pour désigner indifféremment le calcul final PVT et le calcul intermédiaire des pseudo-distances. Un deuxième calcul 302 de données PVT est effectué sur la seconde voie de réception standard à partir des signaux GNSS sécurisés reçus par l'antenne standard. Un calcul 303 du rayon de protection des signaux GNSS sécurisés est également réalisé à partir des signaux reçus sur l'antenne standard. Un test de cohérence 304 est ensuite effectué en comparant l'écart entre les données de navigation PVT calculées par les deux voies de référence et le rayon de protection. Si cet écart est inférieur au rayon de protection alors les calculs réalisés sont déclarés 305 cohérents. Si cet écart est supérieur au rayon de protection alors les calculs réalisés sont déclarés 306 non cohérents.

Un signal GNSS leurré est par définition issu d'une source fictive qui n'est pas cohérente avec la position réelle des satellites de radio-navigation. L'isolation spatiale apportée par l'antenne 144 à formation de voie pointée dans la direction précise d'un ou de plusieurs satellites dont la position est connue permet d'obtenir un résultat sur les données de navigation PVT fiable et authentifié. A l'inverse, le signal reçu par une antenne classique peut être issu d'un leurre ou peut-être plus facilement perturbé par un brouilleur. De ce fait, si les données PVT calculées 302 par la seconde voie de réception standard ne sont pas cohérentes avec celles calculées 301 par la première voie de référence utilisant une antenne 144 à formation de voie, alors le signal GNSS sécurisé reçu par la voie de réception standard n'est pas authentifié et on conclue à la présence d'un leurre ou d'un brouilleur affectant la station de référence dans le mode GNSS sécurisé.

Si la station de référence en mode GNSS sécurisé est affectée par un leurre ou un brouilleur, l'ensemble des services mis en oeuvre ne peut plus être assuré et le système global est déclaré leurré ou brouillé. En effet, si l'exécution de la deuxième étape décrite ci-après conduisait à établir une cohérence entre les signaux GNSS sécurisés et non sécurisés reçus par la station de référence, alors cela signifierait que les signaux non sécurisés sont eux aussi leurrés. Dans le cas contraire, on ne peut pas conclure à une authentification des signaux non sécurisés mais uniquement à un défaut de qualité entre la réception des deux types de signaux. Ce dernier cas est aussi représentatif d'une dégradation de la qualité de fonctionnement du système (par exemple lié à la présence d'un brouilleur) et doit aussi conduire à l'arrêt du service fourni.

Si les signaux GNSS sécurisés reçus par la voie de réception standard de la station GNSS sont authentifiés 305, une deuxième étape est exécutée qui consiste à authentifier les signaux GNSS non sécurisés reçus par la station de référence. Un tel scénario est possible car les signaux non sécurisés sont plus aisément imitables et susceptibles d'être brouillés que les signaux sécurisés.

Un premier calcul 307 du rayon de protection en mode GNSS non sécurisé est réalisé à partir du signal non sécurisé reçu par l'antenne standard de la voie de réception standard. Un deuxième calcul 308 du rayon de protection en mode GNSS sécurisé est réalisé à partir du signal sécurisé reçu par l'antenne standard de la voie de réception standard. Un premier calcul 309 de données PVT est réalisé sur le signal GNSS non sécurisé reçu par l'antenne standard de la voie de réception standard. Un second calcul 310 de données PVT est réalisé sur le signal GNSS sécurisé reçu par l'antenne standard de la voie de réception standard. Un contrôle de cohérence 311 est réalisé en comparant l'écart entre les données PVT calculées respectivement sur les signaux sécurisé et non sécurisé avec une combinaison des rayons de protection calculés respectivement à partir des signaux sécurisés et non sécurisés. La combinaison des rayons de protection est déterminée à partir du principe, connu de l'Homme du métier, de maximum de séparation statistique. Les données PVT du signal non sécurisé sont déclarées cohérentes 312 si l'écart calculé est inférieur à la combinaison, équivalente à une somme, des rayons de protection et le signal non sécurisé reçu par la station de référence est dans ce cas authentifié. Les données PVT calculées sur le signal non sécurisé sont déclarées non cohérentes 313 dans le cas contraire et le signal non sécurisé reçu par la station de référence est déclaré leurré.

Pour authentifier les données PVT du signal non sécurisé, on effectue une comparaison avec le signal sécurisé reçu par l'antenne standard de la station de référence pour que la comparaison, décrite au paragraphe suivant, entre les mesures réalisées à partir des signaux « utilisateurs » et les mesures réalisées à partir des signaux reçus par la station de référence soit menée dans des conditions de réception équivalentes. La comparaison ne peut pas être réalisée avec le signal sécurisé reçu par l'antenne directive à formation de voie de la voie de référence, car celle ci apporte un gain en rapport signal à bruit par rapport à l'antenne dite « standard ». En outre, il peut être techniquement difficile d'asservir des voies directives sur l'ensemble des satellites visibles.

Dans une dernière étape, le module d'authentification 210 effectue un contrôle de cohérence sur les signaux GNSS émis par les différents récepteurs 101,102,103 présents dans la zone de couverture de la station de référence 104 et reçus par cette même station via l'antenne 140. Ces signaux sont encore appelés signaux GNSS utilisateurs. Plus précisément, un contrôle de l'authentification des signaux utilisateurs non sécurisés est réalisé en vérifiant leur cohérence avec les signaux utilisateurs sécurisés. Les signaux utilisateurs sécurisés sont considérés authentiques si l'authentification des signaux sécurisés reçus directement par la station de référence est positive 305.

Un test de cohérence 318 des calculs de données PVT sur les signaux utilisateurs non sécurisés d'une part et sécurisés d'autre part est réalisé de façon similaire au test de cohérence 311 exécuté au cours de la deuxième étape décrite ci-dessus. Autrement dit, un premier calcul 314 du rayon de protection en mode GNSS non sécurisé est réalisé à partir du signal utilisateur non sécurisé reçu par l'antenne VHF 140 de la station de référence 104. Un deuxième calcul 315 du rayon de protection en mode GNSS sécurisé est réalisé à partir du signal utilisateur sécurisé reçu par cette même antenne VHF 140. Un premier calcul 316 de données PVT est réalisé sur le signal GNSS utilisateur non sécurisé. Un second calcul 317 de données PVT est réalisé sur le signal GNSS utilisateur sécurisé. Un contrôle de cohérence 311 est réalisé en comparant l'écart entre les données PVT calculées respectivement sur les signaux utilisateurs sécurisé et non sécurisé avec une combinaison des rayons de protection calculés respectivement à partir des signaux utilisateurs sécurisés et non sécurisés. La combinaison des rayons de protection est déterminée à partir du principe, connu de l'Homme du métier, de maximum de séparation statistique. Les données PVT du signal utilisateur non sécurisé sont déclarées cohérentes 319 si l'écart calculé est inférieur à la combinaison des rayons de protection et le signal utilisateur non sécurisé est authentifié. Les données PVT calculées sur le signal utilisateur non sécurisé sont déclarées non cohérentes 320 dans le cas contraire et le signal utilisateur non sécurisé reçu par la station de référence est détecté comme étant un leurre. Le contrôle de cohérence réalisé sur les données PVT du signal utilisateur non sécurisé n'est valide qu'à la condition que la cohérence des signaux sécurisés ait été validée au niveau de la station de référence. Si les signaux sécurisés reçus par la station de référence ont été authentifiés alors on suppose que les signaux utilisateurs sécurisés sont également authentifiés.

Les différents tests de cohérence 311 et 318 réalisés permettent d'aboutir aux conclusions suivantes.

Si 321 les signaux GNSS non sécurisés reçus par la station de référence sont authentifiés et si certains signaux utilisateurs sont détectés comme étant des leurres, l'authentification de ces utilisateurs est négative.

Si 322 les signaux GNSS non sécurisés reçus par la station de référence sont authentifiés et si certains signaux utilisateurs sont également authentifiés, l'authentification de ces utilisateurs est positive.

Si 323,324, les signaux GNSS non sécurisés reçus par la station de référence ne sont pas authentifiés, alors le système d'authentification des signaux utilisateurs mis en place par la station de référence n'est pas utilisable, quelque soit le résultat du test de cohérence 318 réalisé sur les signaux utilisateurs, car la station a pu identifier un leurrage des signaux non sécurisés non forcément détectable au niveau des utilisateurs..

## Revendications

1. Station de réception de signaux de radio-navigation par satellite (104) **caractérisée en ce qu'**elle comporte au moins des premier moyens (140,141) de transmission large bande adaptés pour recevoir un signal spécifique émis par un émetteur/récepteur (101,102,103) et extraire au moins un signal de radio-navigation, appelé signal de radio-navigation utilisateur, contenu dans ledit signal spécifique, des premier moyens centralisés (142) de traitement numérique dudit signal de radio-navigation utilisateur adaptés à déterminer une mesure de pseudo-distance associée audit signal et des moyens centralisés de calcul (143) d'informations de navigation (PVT) à partir des dites mesures de pseudo-distance, lesdits moyens (140,141) de transmission étant en outre adaptés à transmettre lesdites informations de navigation (PVT) audit émetteur/récepteur (101,102,103), la station de réception (104) comportant en outre une première voie de référence de réception de signaux de radio-navigation comportant au moins une antenne directive (144) à formation de voie pour la réception de signaux de radio-navigation émis par au moins un satellite, des second moyens (145) de traitement du signal de radio-navigation reçu par ladite antenne directive (144) à formation de voie et une unité de calcul (146) adaptée à réaliser, à partir des mesures fournies par lesdits second moyens (145) de traitement du signal, une amélioration de la fiabilité, un contrôle de l'intégrité et une authentification desdites informations de navigation (PVT), l'unité de calcul (146) comportant au moins un premier module (207) de sécurité adapté à mettre en oeuvre, de façon centralisée, le déchiffrement des codes d'étalement et des données de tous les signaux de radio-navigation utilisateur.

2. Station de réception de signaux de radio-navigation (104) selon la revendication 1 dans laquelle l'unité de calcul (146) comporte en outre un deuxième module (208) adapté à réaliser la démodulation du signal de radio-navigation de référence, à calculer une estimée des erreurs liées à la propagation ionosphérique des signaux à partir de mesures du temps de transmission entre le satellite et la station de référence (104) réalisées sur au moins deux signaux reçus sur la première voie de référence à deux fréquences distinctes et à fournir auxdits premier moyens (142) de traitement de signal ces corrections de sorte à améliorer la fiabilité du calcul des informations de navigation (PVT).

3. Station de réception de signaux de radio-navigation (104) selon la revendication 2 dans laquelle l'unité de calcul (146) comporte en outre un troisième module (209) adapté à vérifier l'intégrité des signaux de radio-navigation utilisateur en comparant la mesure de pseudo-distance calculée par les premier moyens (142) de traitement de signal à une mesure de pseudo-distance de référence calculée à partir de la position connue de la station de référence (104) et de la position des satellites de radio-navigation extraites des éphémérides contenus dans le message de navigation démodulé par le deuxième module (208).

4. Station de réception de signaux de radio-navigation (104) selon l'une des revendications précédentes dans laquelle l'unité de calcul comporte en outre une seconde voie de réception de signaux de radio-navigation et un quatrième module (210) adapté à réaliser l'authentification des signaux de radio-navigation sécurisés reçus par la station de référence en exécutant au moins les étapes suivantes :
- Comparer (304) l'écart entre les données de navigation (301,302) mesurées à partir du signal sécurisé reçu d'une part sur la première voie de référence et d'autre part sur la seconde voie de référence avec le rayon de protection du signal sécurisé (303),
- Si l'écart est inférieur au rayon de protection (303), authentifier le signal sécurisé reçu sur la seconde voie de réception.

5. Station de réception de signaux de radio-navigation (104) selon la revendication 4 dans laquelle le quatrième module (210) est en outre adapté à réaliser l'authentification des signaux non sécurisés reçus par la station de référence en exécutant au moins les étapes suivantes :
- Comparer (311) l'écart entre les données de navigation (309,310) mesurées à partir du signal non sécurisé reçu sur la seconde voie de réception d'une part et du signal sécurisé reçu sur la seconde voie de réception d'autre part avec une combinaison des rayons de protection (307,308) du signal non sécurisé et du signal sécurisé,
- Si l'écart est inférieur à ladite moyenne, authentifier le signal non sécurisé reçu sur la seconde voie de réception.

6. Station de réception de signaux de radio-navigation (104) selon l'une des revendications 4 ou 5 dans laquelle le quatrième module (210) est en outre adapté à réaliser l'authentification des signaux non sécurisés utilisateurs en exécutant au moins les étapes suivantes :
- Comparer (318) l'écart entre les données de navigation (316,317) mesurées à partir du signal utilisateur non sécurisé d'une part et du signal utilisateur sécurisé d'autre part avec une combinaison des rayons de protection (314,315) du signal utilisateur non sécurisé et du signal utilisateur sécurisé,
- Si l'écart est inférieur à ladite moyenne, authentifier le signal non sécurisé utilisateur.

7. Récepteur de radio-navigation par satellites (101,102,103) **caractérisé en ce qu'il** comporte des moyens (111,112,113,114) adaptés pour transmettre les signaux de radio-navigation reçus, transposés en fréquence intermédiaire ou en bande de base vers une station de réception de signaux de radio-navigation de référence au sol (104) selon l'une des revendications 1 à 6 et recevoir des informations de navigation (PVT) calculées en provenance de ladite station de référence (104).

8. Système de radio-navigation par satellite comportant au moins une station de réception de signaux de radio-navigation (104) selon l'une des revendications 1 à 6 et une pluralité de récepteurs de signaux de radio-navigation (101,102,103) selon la revendication 7.
